# EUROPÄISCHE PATENTSCHRIFT

(11) **EP 0 661 141 B1**
(45) Veröffentlichungstag und Bekanntmachung des Hinweises auf die Patenterteilung: **22.07.1998**
(21) Anmeldenummer: 94117131.6
(22) Anmeldetag: 29.10.1994
(51) Int. Cl.: B26D 1/00, A22B 5/20

(54) **Messer zum Zerlegen und Zerwirken insbesondere von Schlachtgut**
Knife for dividing and carving in particular for slaughter material
Couteau pour disséquer et dépécer en particulier pour des produits de boucherie

(30) Priorität: 04.12.1993 DE 4341398
(43) Veröffentlichungstag der Anmeldung: 05.07.1995
(73) Patentinhaber: Balke, Axel, D-42653 Solingen 1 (DE)
(72) Erfinder: Balke, Axel, D-42653 Solingen 1 (DE)
(74) Vertreter: Lippert, Hans-Joachim, Dipl.-Ing.

(56) Entgegenhaltungen:
- EP-A- 0 413 322
- DE-A- 2 331 806
- DE-A- 3 118 069
- DE-A- 4 117 229
- US-A- 2 757 697

## Beschreibung

Die Erfindung betrifft ein Messer zum Zerlegen und Zerwirken insbesondere von Schlachtgut gemäß dem Oberbesriff des Patentanspruchs 1.

Ein Messer der genannten Art ist aus der DE-A-2 331 806 bekannt. Aufgrund der unterschiedlichen Höhen der durch die konkaven Schneidbereiche verbundenen Schneidspitzen werden die Schneideinheiten weniger schnell abgenutzt als bei gleich hohen Schneidspitzen, so daß eine längere Standzeit erreicht wird.

Eine derartige Ausbildung der Schneideinheiten ist jedoch für ein glattes, splitterfreies Zerlegen und Zerwirken eines weichere und härtere Bestandteile aufweisenden Gutes, insbesondere Schlachtgutes, nur bedingt geeignet. Insbesondere bei härterem Gut wird eine unregelmäßige Schnittführung festgestellt, die zum Splittern sowohl von stärkeren Knochen wie auch Weichknochen, z. B. Rippen, führen kann. Die unregelmäßige Schnitt-führung ist insbesondere bei automatischem Einsatz derartiger Messer von Nachteil.

Der Erfindung liegt daher die Aufgabe zugrunde, ein Messer der eingangs genannten Art mit langer Standzeit so weiterzuentwikkeln, daß insbesondere beim Durchtrennen von dickerem, härterem Gut eine optimal gerade und somit glatte und saubere Schnittführung gewährleistet ist.

Die Aufgabe wird in einem Messer der eingangsgenannten Art erfindungsgemäß dadurch gelöst, daß jeweils der erste konkave Schneidbereich von der einen und der zweite konkave Schneidbereich von der anderen Seite angeschärft ist.

Aufgrund der abwechselnden Anschärfung von beiden Seiten über die gesamte Materialstärke des Messers werden zwei Schneidkanten gebildet, die bei senkrechter Haltung des Messers an den beiden Messerseiten senkrecht abfallen. Es ergibt sich dadurch bei optimal gerader Schnittführung ein an beiden Seiten absolut glatter und sauberer Schnitt, der insbesondere bei automatischem Einsatz des Messers vorteilhaft ist.

Zwischen den aneinander anschließenden Schneidspitzen des ersten konkaven Schneidbereichs und des zweiten konkaven Schneidbereichs ist vorzugsweise eine U-förmige Lücke ausgebildet. Die Lücke dient dazu, die Schneidspitzen des zweiten Schneidbereichs vom ersten Schneidbereich etwas zu trennen, so daß die auf das Schlachtgut treffende höhere Schneidspitze des zweiten Schneidbereichs sowie auch die höhere Schneidspitze des ersten Schneidbereichs ein effektives Zerreißen des Schlachtgutes bewirkt. Darüberhinaus können sich weiche Bestandteile, wie z. B. Fett, in den Lücken ansammeln.

In einer bevorzugten Ausgestaltung der Erfindung sind die beiden Schneidbereiche und die Schneidspitzen jeder Schneideinheit etwa gleich ausgebildet.

Weiterhin können die Schneidbereiche zumindest teilweise mit einer Verzahnung versehen sein. Je nach Struktur und Härte der im Schlachtgut vorhandenen Knochen eignet sich eine spitzen- oder wellenförmige Verzahnung. Die Zähne dienen insbesondere zum Trennen der inneren, weicheren Knochenbestandteile, wie z. B. des Knochenmarks und des umgebenden Gutes. Dieses preßt sich in die Zwischenräume der Zähne und wird dadurch sauber geschnitten.

Die beiden höheren Schneidspitzen der beiden konkaven Schneidbereiche sind vorzugsweise mit einer Vorphase versehen. Diese verringert in der Anfangsphase des Schneidvorgangs den Anpreßdruck gegen Knochen, so daß Splitter vermieden werden. Die Vorphase kann einseitig oder, wie die beiden konkaven Schneidbereiche, an unterschiedlichen Seiten angeordnet sein.

Um den Reibungswiderstand und die damit verbundene Wärmeentwicklung weiter zu verringern, ist die Länge der zwischen den Schneideinheiten angeordneten Schneidlücken zweckmäßigerweise so bemessen, daß sie etwa so groß oder größer als die Länge eines Schneidbereichs der Schneideinheiten ist.

Der Schneidlückengrund kann je nach der Beschaffenheit des Schlachtgutes eine geeignete Form aufweisen. Er kann z. B. in tangentialer Richtung des Messers gerade, schräg oder bogenförmig ausgebildet sein.

Außerdem kann es vorteilhaft sein, die Schneidlücken anzuschärfen, so daß sie zum Nachschneiden weicherer Bestandteile, die sich in die Schneidlücken einpressen, wie z. B. Haut oder anderes Gewebe, geeignet sind.

Ein Ausführungsbeispiel der Erfindung wird im folgenden anhand der Zeichnung näher beschrieben.

In der Zeichnung zeigen:
- Figur 1: eine Seitenansicht des Messers im Ausschnitt,
- Figur 2: eine vergrößerte Ansicht eines Teils des in Figur 1 dargestellten Messers,
- Figur 3: eine Schnittansicht längs der Linie III-III in Figur 2 und
- Figur 4: eine Schnittansicht längs der Linie IV-IV in Figur 2.

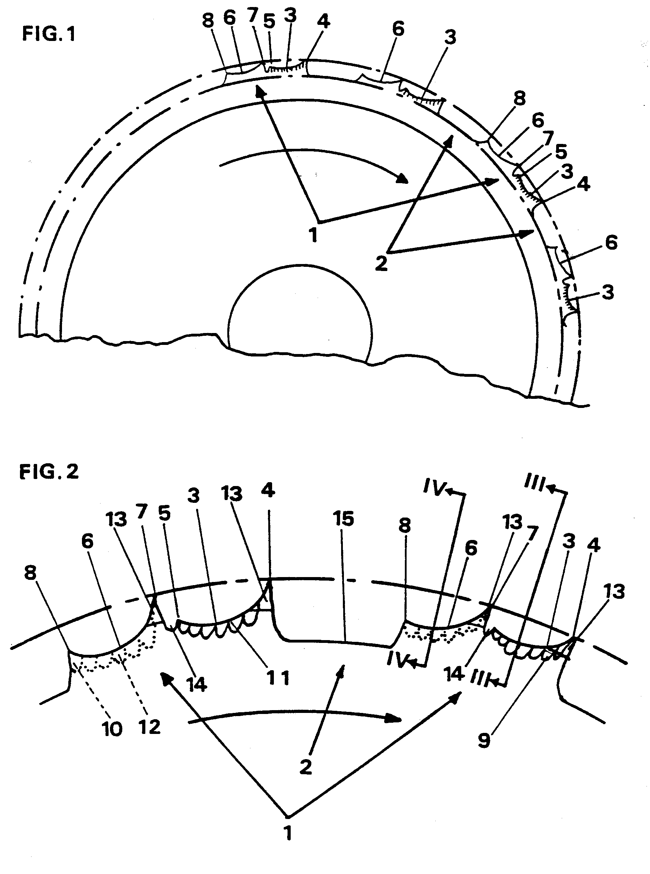

Das in Figur 1 dargestellte Messer zum Zerlegen und Zerwirken von Schlachtgut ist als kreisförmiges Maschinenmesser ausgebildet. Das Messer weist eine Vielzahl von Schneideinheiten 1 auf, die durch Schneidlücken 2 voneinander getrennt sind.

Jede Schneideinheit 1 weist an ihrem einen Ende einen ersten konkaven Schneidbereich 3 auf, der sich zwischen zwei Schneidspitzen 4 und 5 erstreckt. Die eine, in der Zeichnung mit Bezug auf die gewählte Schneidrichtung am vorderen Ende der Schneideinheit 1 angeordnete Schneidspitze 4 ist höher als die am hinteren Ende der Schneideinheit 1 angeordnete Schneidspitze 5. An das hintere Ende des ersten konkaven Schneidbereichs 3 schließt sich ein zweiter konkaver Schneidbereich 6 zwischen zwei Schneidspitzen 7 und 8 an, von denen die vordere Schneidspitze 7 ebenfalls höher als die hintere Schneidspitze 5 des ersten konkaven Schneidbereichs 3 ist.

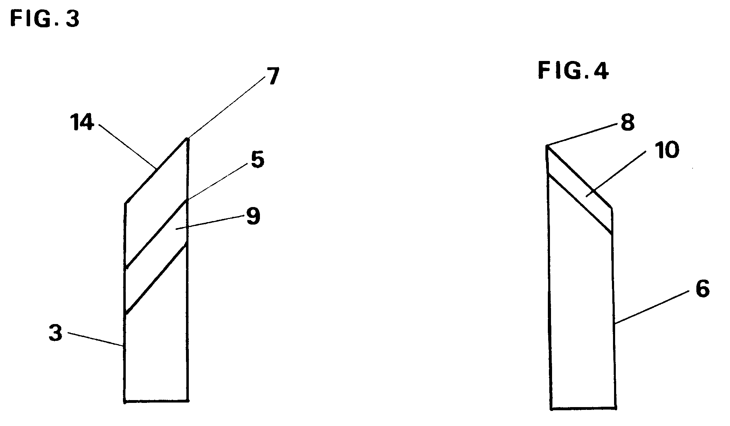

Wie insbesondere aus den Figuren 2, 3 und 4 hervorgeht, ist der erste konkave Schneidbereich 3, vom Betrachter der Figuren 3 und 4 aus gesehen, an der linken und der zweite konkave Schneidbereich 6 an der rechten Seite angeschärft. Ansonsten sind die beiden Schneidbereiche 3 und 6 mit den jeweiligen Schneidspitzen 4 und 5 bzw. 7 und 8 etwa gleich ausgebildet.

An den angeschärften Bereichen 9 bzw. 10 sind die beiden Schneidbereiche 3 und 6 mit einer Verzahnung 11 bzw. 12 versehen. Weiterhin weisen die beiden vorderen Schneidspitzen 4 und 7 der beiden Schneidbereiche 3 bzw. 6 eine einseitig ausgebildete Vorphase 13 auf.

Die hintere Schneidspitze 5 des ersten Schneidbereichs 3 und die vordere Schneidspitze 7 des zweiten Schneidbereichs 6 sind durch eine relativ kleine U-förmige Lücke 14 voneinander getrennt. Die Flanken der Schneidspitze 5 und 7 münden fluchtend in die U-Form der Lücke 14.

Die Schneidlücken 2 zwischen den Schneideinheiten 1 haben eine Länge, die etwa der Länge eines der Schneidbereiche 3 bzw. 6 der Schneideinheiten 1 entspricht. Der Schneidlückengrund 15 ist flach ausgebildet und verläuft etwa tangential zur Kreisbogenform des Messers.

## Patentansprüche

1. Messer zum Zerlegen und Zerwirken insbesondere von Schlachtgut mit einer Vielzahl von Schneideinheiten (1) und dazwischen liegenden Schneidlücken (2), wobei die Schneideinheiten (1) jeweils zwei konkave Schneidbereich (3, 6) aufweisen, von denen ein erster (3) jeweils am einen ende der Schneideinheit (1) angeordnet ist und sich zwischen zwei Schneidspitzen (4, 5) erstreckt, wobei die eine Schneidspitze (4) höher ist als die andere Schneidspitze (5) und wobei sich an den ersten konkaven Schneidbereich (3) an der Seite dessen niedrigerer Schneidspitze (5) der zweite konkave Schneidbereich (6) zwischen zwei Schneidspitzen (7, 8) anschließt, von denen die an die niedrigere Schneidspitze (5) des ersten Schneidbereichs (3) anschließende Schneidspitze (7) höher ist als die andere an den zweiten Schneidbereich (6) anschließende Schneidspitze (8), **dadurch gekennzeichnet**, daß jeweils erste konkave Schneidbereich (3) von der einen und der zweite konkave Schneidbereich (6) von der anderen Seite angeschärft ist.

2. Messer nach Anspruch 1, **dadurch gekennzeichnet**, daß zwischen den aneinander anschließenden Schneidspitzen (5, 7) des ersten konkaven Schneidbereichs (3) und des zweiten konkaven Schneidbereichs (6) eine U-förmige Lücke (14) ausgebildet ist.

3. Messer nach Anspruch 1 oder 2, **dadurch gekennzeichnet**, daß die beiden Schneidbereiche (3, 6) mit den Schneidspitzen (4, 5) und (7, 8) etwa gleich ausgebildet sind.

4. Messer nach einem der Ansprüche 1-3, **dadurch gekennzeichnet**, daß die Schneidbereiche (3, 6) zumindest teilweise mit einer Verzahnung (11 bzw. 12) versehen sind.

5. Messer nach einem der Ansprüche 1-4, **dadurch gekennzeichnet**, daß die beiden höheren Schneidspitzen (4, 7) der beiden konkaven Schneidbereiche (3 bzw. 6) mit einer Vorphase (13) versehen sind.

6. Messer nach einem der Ansprüche 1-5, **dadurch gekennzeichnet**, daß die Schneidlücken (2) zwischen den Schneideinheiten (1) etwa so groß oder größer sind als ein Schneidbereich (3 bzw. 6) der Schneideinheiten (1).

7. Messer nach einem der Ansprüche 1-6, **dadurch gekennzeichnet**, daß die Schneidlücken (2) zwischen den Schneideinheiten (1) angeschärft sind.

## Claims

1. Knife for dividing and carving, in particular for slaughter material, with multiple cutting elements (1) with intermediate cutting gaps (2), where the cutting elements (1) each display two concave cutting areas (3, 6), the first (3) of which is arranged on the end of each cutting element (1), extending between two cutting tips (4, 5), where one cutting tip (4) is higher than the other cutting tip (5) and where the second concave cutting area (6) adjoins the first concave cutting area (3) on the side of its lower cutting tip (5) between two cutting tips (7, 8), of which the cutting tip (7) adjoining the lower cutting tip (5) of the first cutting area (3) is higher than the other cutting tip (8) adjoining the second cutting area (6), **characterised in that** the first concave cutting area (3) each is sharpened from one side and the second concave cutting area (6) from the other side.

2. Knife as per Claim 1, **characterised in that** a U-shaped gap (14) is formed between the adjoining cutting tips (5, 7) of the first concave cutting area (3) and the second cutting area (6).

3. Knife as per Claim 1 or 2, **characterised in that** the two cutting areas (3, 6) with the cutting tips (4, 5) and (7, 8) are of roughly the same design.

4. Knife as per one of Claims 1 to 3, **characterised in that** the cutting areas (3, 6) are at least partially toothed (11 or 12).

5. Knife as per one of Claims 1 to 4, **characterised in that** the two higher cutting tips (4, 7) of the two concave cutting areas (3 or 6) are provided with a chamfer (13).

6. Knife as per one of Claims 1 to 5, **characterised in that** the cutting gaps (2) between the cutting elements (1) are roughly as large as or larger than a cutting area (3 or 6) of the cutting elements (1).

7. Knife as per one of Claims 1 to 6, **characterised in that** the cutting gaps (2) between the cutting elements (1) are sharpened.

## Revendications

1. Couteau pour disséquer et dépécer en particulier pour des produits de boucherie avec une multitude d'unités coupantes (1) et des lacunes coupantes intermédiaires (2) où les unités coupantes (1) présentent respectivement deux zones coupantes concaves (3, 6) dont une première est disposée respectivement à l'une des extrémités de l'unité coupante (1) et s'étend entre deux pointes coupantes (4, 5) la pointe coupante (4) étant plus haute que l'autre pointe coupante (5) et où la première zone coupante concave (3) est suivie, à la face latérale de la pointe plus basse (5) de cette zone coupante concave (3), de la deuxième zone coupante concave (6) entre deux pointes coupantes (7,8) dont la pointe coupante (7) suivant la pointe coupante plus basse (5) de la première zone coupante (3) est plus haute que l'autre pointe coupante (8) suivant la deuxième zone coupante (6), couteau caractérisé en ce que respectivement la première zone coupante (3) est affûtée d'une face et que la deuxième zone coupante concave (6) est affûtée de l'autre face.

2. Couteau suivant revendication 1, caractérisé en ce qu'une lacaune en U (14) est formée entre les pointes coupantes se succédant (5, 7) de la première zone coupante concave (3) et la deuxième zone coupante concave (6).

3. Couteau suivant revendication 1 ou 2, caractérisé en ce que les deux zones coupantes (3, 6) avec les pointes coupantes (3, 6) et (7, 8) sont formées de façon à peu près identique.

4. Couteau suivant une des revendications 1 à 3, caractérisé en ce que les zones coupantes (3, 6) sont du moins en partie pourvues d'une denture (11 ou 12).

5. Couteau suivant une des revendications 1 à 4, caractérisé en ce que les deux pointes coupantes plus hautes (4, 7) des deux zones coupantes concaves (3 ou 6) sont pourvues d'un avant-biseau (13).

6. Couteau suivant une des revendications 1 à 5, caractérisé en ce que les lacunes coupantes (2) entre les unités coupantes (1) sont approximativement aussi grandes ou plus grandes qu'une zone coupante (3 ou 6) des unités coupantes (1).

7. Couteau suivant une des revendications 1 à 6, caractérisé en ce que les lacunes coupantes (2) entre les unités coupantes (1) sont affutées.
